(19) **Europäisches Patentamt / European Patent Office / Office européen des brevets**

(11) **EP 1 274 794 B1**

(12) **FASCICULE DE BREVET EUROPEEN**

(45) Date de publication et mention de la délivrance du brevet:
**09.05.2007 Bulletin 2007/19**

(21) Numéro de dépôt: **01919532.0**

(22) Date de dépôt: **20.03.2001**

(51) Int Cl.:
*C08L 51/00* (2006.01)    *C14C 11/00* (2006.01)
*C08F 265/06* (2006.01)

(86) Numéro de dépôt international:
**PCT/FR2001/000825**

(87) Numéro de publication internationale:
**WO 2001/072897 (04.10.2001 Gazette 2001/40)**

(54) **COMPOSITIONS POUR LE TRAITEMENT DU CUIR CONTENANT DES DISPERSIONS AQUEUSES DE POLYMERE, FILMOGENES EN L'ABSENCE DE SOLVANT ORGANIQUE**

ZUSAMMENSETZUNGEN MIT WÄSSRIGEN POLYMERDISPERSIONEN, FILMBILDEND OHNE LÖSUNSMITTEL, ZUR BEHANDLUNG VON LEDER

COMPOSITIONS FOR TREATING LEATHER CONTAINING AQUEOUS POLYMER DISPERSIONS, FILM-FORMING IN THE ABSENCE OF ORGANIC SOLVENT

(84) Etats contractants désignés:
**AT BE CH CY DE DK ES FI FR GB GR IE IT LI LU MC NL PT SE TR**

(30) Priorité: **24.03.2000 FR 0003798**

(43) Date de publication de la demande:
**15.01.2003 Bulletin 2003/03**

(60) Demande divisionnaire:
**07102660.3**

(73) Titulaire: **Cray Valley S.A.**
**92400 Courbevoie (FR)**

(72) Inventeurs:
• **BIVER, Claudine**
  **F-92000 Nanterre (FR)**
• **DRUJON, Xavier**
  **F-59240 Dunkerque (FR)**
• **LEIBLER, Ludwik**
  **F-75016 Paris (FR)**
• **VALOT, Emeryc**
  **F-78220 Viroflay (FR)**

(74) Mandataire: **Chaillot, Geneviève et al**
**Cabinet CHAILLOT,**
**B.P. No. 74**
**92703 Colombes Cédex (FR)**

(56) Documents cités:
EP-A- 0 690 081          DE-A- 19 802 110
US-A- 5 614 049          US-A- 5 723 182
US-A- 5 744 540

**Description**

L'invention se rapporte au domaine des dispersions aqueuses de polymères utilisées dans des compositions pour le traitement du cuir. Elle concerne en particulier les dispersions aqueuses de polymère filmogène sans solvant de coalescence et leur utilisation dans des formulations pour le finissage du cuir.

Il est bien connu de l'homme de l'art que le finissage sur cuir dépend de la qualité de la peau à traiter. Pour des cuirs pleine fleur ou des fleurs corrigées, le finissage sans modifier l'aspect du grain doit apporter une certaine protection au support. Par contre sur une croûte, le finissage systématiquement pigmenté permet de reconstituer une fleur artificielle et apporte les caractéristiques requises en fonction de l'utilisation finale du cuir.

Selon la qualité du cuir et son utilisation finale, le finissage est composé de deux ou trois couches superposées. La première, en contact avec le cuir et généralement très souple, constitue la couche de fond. Selon l'application finale, elle peut être transparente mais colorée ou couvrante donc pigmentée. La deuxième couche ou flanche a classiquement une dureté moyenne. Elle est souvent colorée mais couvre peu. La couche externe, appelée fixative, est toujours transparente. C'est la couche la plus sollicitée. Elle doit donc présenter les performances les plus élevées. Elle possède en général une dureté élevée (entre 60 et 90 shore A), une bonne résistance aux frottements à sec ou en présence d'eau et une bonne adhérence.

Les résines pour fixatives sont souvent en solution dans des solvants organiques. Les résines les plus utilisées sont des polyuréthanes de coût relativement élevé, des protéiniques, ou des nitrocelluloses qui dans la mesure où elles sont proposées en solvant présentent des risques potentiels de toxicité et d'inflammabilité lors de la formulation ou de l'application. Ces résines sont souvent formulées avec un réticulant.

Il existe quelques fixatives dispersées en phase aqueuse, le plus souvent des polyuréthanes comme les BAYDERM® 60, 80, 85 ou 90 UD de Bayer mais ces résines, de part leur procédé de fabrication, contiennent également des résidus de solvant.

Plusieurs brevets décrivent la possibilité d'utiliser des polymères acryliques à structure coeur-écorce, en dispersion dans l'eau.

Les brevets US 4,876,313, US 4,916,171 et EP 0,348,565 proposent, par exemple, d'utiliser de tels polymères dans lesquels l'écorce est rendue alcali-soluble par l'introduction d'une teneur élevée en monomères acides, typiquement de l'ordre de 10 à 60% en poids par rapport aux monomères constituant l'écorce. L'inconvénient de ce type de produit, à forte teneur en fonction acide, est leur grande sensibilité à l'eau.

US 5,185,387 décrit l'utilisation de latex à structure coeur-écorce dans lesquels le coeur a une température de transition vitreuse (Tg) inférieure à 0˚C et l'écorce, non-réticulée, possède une température de transition vitreuse inférieure à 60˚C. L'inconvénient principal de ces copolymères de basses Tg est qu'ils conduisent à des revêtements pouvant présenter du collant superficiel en fonction des conditions thermiques, lors de l'application ou de l'utilisation.

EP 0,009,258 propose, sur la base d'un même latex, d'introduire en écorce des monomères tels que la N-méthylol-acrylamide pouvant réticuler lors de la formation du film et diminuer le collant superficiel. Toutefois, cette réticulation n'est possible qu'à une température élevée, supérieure typiquement à 120˚C ce qui n'est pas envisageable pour le traitement du cuir où les températures doivent être inférieures à 80 ˚C.

US 4,256,809 propose, pour le traitement du cuir, une dispersion homogène ou structurée comportant des fonctions aldéhydes polymérisables, telles que l'acroléine ou la méthacroléine, qui réticulent à basse température par l'ajout dans le sérum d'un réactif de type diacide-carboxylique-bis-hydrazyde. Or l'acroléine est un monomère volatil, inflammable et très toxique qui tend actuellement à disparaître de tous les produits.

EP 0,789,082 propose l'utilisation de latex à structure coeur-écorce préparés selon un procédé en trois étapes, assez compliqué. Dans ces latex, le coeur a une température de transition vitreuse inférieure à 20˚C, l'écorce une température de transition vitreuse supérieure à 20˚C, le coeur et l'écorce comporte des groupes acides et le coeur est réticulé par mise en contact avec des métaux de transition tel que le zinc.

Enfin, US 5,723,182 propose une composition aqueuse de revêtement pour le traitement du cuir comprenant un polymère en émulsion aqueuse, dans lequel le polymère de 1$^{\text{ère}}$ phase interne est plus hydrophile et sert de dispersant au polymère de 2$^{\text{nd}}$ phase externe.

Les solutions connues actuellement ne sont donc pas entièrement satisfaisantes dans la mesure où les compositions aqueuses proposées soit contiennent des solvants ou des monomères toxiques, soit présentent de la sensibilité à l'eau ou du collant superficiel, soit, enfin, s'obtiennent à partir de procédés relativement coûteux ou compliqués ce qui paraît incompatible avec l'application envisagée.

Le problème restant à résoudre est donc la préparation d'une composition pour le traitement du cuir contenant peu ou pas de solvant, qui s'obtienne facilement et donne des revêtements non collants, résistants à l'eau et aux frottements, avec une bonne adhérence au substrat.

La demanderesse a trouvé que l'utilisation dans une formulation pour finissage du cuir de dispersions aqueuses de particules de polymère comportant au moins une phase interne formée par un polymère à caractère mou de température de transition vitreuse inférieure à 20˚C, et au moins une phase externe formée par un polymère à caractère dur de température de transition vitreuse supérieure à 60˚C permet d'obtenir des revêtements avec peu ou pas de solvant. Ces revêtements sont non collants et présentent une bonne adhérence, une bonne résistance aux frottements ainsi qu'une bonne tenue à l'eau. Ces propriétés sont ajustées en introduisant en écorce des monomères fonctionnels adaptés qui peuvent améliorer par exemple l'adhérence des revêtements, leur tenue à l'eau et aux solvants. Ces monomères sont choisis pour permettre une éventuelle post-réticulation. Enfin, le toucher obtenu avec ces différents finissages est très différent de celui obtenu avec une fixative polyuréthanne, acrylique ou à base de nitrocellulose.

L'objet de la présente invention est donc une composition pour le traitement du cuir, en particulier une composition pour le finissage et plus particulièrement pour fixative, qui contient de telles dispersions aqueuses de polymères, éventuellement un agent réticulant et les additifs connus de l'homme du métier, tels que des anti-mousse, des mouillants, des épaississants, des colorants, des charges, etc...

L'utilisation selon l'invention de ces dispersions aqueuses de polymère dans des formulations de traitement du cuir devrait permettre de réduire, voire d'éliminer, l'utilisation des co-solvants et des plastifiants, d'où l'obtention directe de produits moins inflammables et moins toxiques.

Les formulations pour le traitement du cuir selon l'invention, notamment les formulations pour le finissage du cuir, contiennent au moins une dispersion aqueuse de particules multiphasiques de polymères, chaque particule comprenant au moins deux phases distinctes :

- une première phase interne formée par un polymère P1 à caractère mou ayant une température de transition vitreuse (Tg1) inférieure à 20˚C, et
- une deuxième phase externe, alcali-insoluble, formée par un polymère P2 à caractère dur ayant une température de transition vitreuse (Tg2) supérieure à 60˚C,

le polymère P1 ayant une hydrophobie supérieure à celle du polymère P2,
et éventuellement un agent réticulant.

De préférence, les particules sont biphasiques et possèdent une structure coeur/écorce.

De préférence, le coeur contient le polymère P1 et l'écorce contient le polymère P2.

De préférence, également, le polymère P1 a une Tg1 inférieure à 5˚C et le polymère P2 a une Tg2 supérieure à 64˚C.

Le polymère P1 est plus hydrophobe que le polymère P2, le polymère P2 comprenant au moins 50 % en poids de monomères hydrophobes et de 0 à 19 % en poids de monomères fonctionnels, choisis de préférence parmi des monomères acides, hydroxylés ou époxydés.

Les monomères fonctionnels introduits dans le polymère P2 peuvent être avantageusement réticulés lors de l'application de la composition sur le cuir par l'introduction dans la phase aqueuse d'un agent réticulant adapté et classiquement utilisé dans la profession tel qu'un polyisocyanate, une polyaziridine, un polycarbodiimide, etc.

De manière générale, le caractère hydrophobe d'un polymère est sa non solubilité dans l'eau ou bien son absence d'affinité vis-à-vis de l'eau. Selon l'invention, le caractère hydrophobe d'un polymère peut être défini à l'aide du paramètre de solubilité δ décrit dans « Properties of polymers » de D.W. Van Krevelen, 1990, 3ème édition, p.200. Ce paramètre permet de classer les différents polymères selon leur affinité vis-à-vis de l'eau. Selon l'invention, un polymère est hydrophobe si son δ est inférieur à 26. De plus, si δ1 d'un polymère 1 est inférieur à δ2 d'un polymère 2, alors 1 est plus hydrophobe que 2.

Le caractère alcali-soluble, par opposition au caractère alcali-insoluble, est tel que défini par exemple dans le brevet EP 0,348,565.

Avantageusement, les polymères P1 et P2 des dispersions aqueuses selon l'invention contiennent :

- de 90 à 100 % en poids de motifs obtenus par polymérisation d'au moins un monomère choisi dans le groupe (I) constitué par les alkyl($C_1$-$C_{16}$) esters de l'acide (méth)acrylique tels que le (méth)acrylate de méthyle, le (méth) acrylate d'éthyle et le (méth)acrylate de butyle, les hydroxy-alkyles esters de l'acide (méth)acrylique, les esters vinyliques des acides carboxyliques linéaires ou ramifiés tels que l'acétate de vinyle et le stéarate de vinyle, le styrène, les alkylstyrènes tels que le méthyl-styrène, les haloalkylstyrènes tels que le chlorométhylstyrène, le (méth) acrylamide, l'acrylonitrile, le chlorure de vinyle, les acides (méth)acryliques et leurs dérivés tels que les anhydrides, les monomères comportant des fonctions acides ou basiques tels que l'acide itaconique, l'acide fumarique, l'acide crotonique, l'acide maléique, les monomères (méth)acryliques ou vinyliques silanés tels que le méthacryloxypropyl triéthoxy ou triisopropoxysilane, les monomères contenant des groupes acétoacétoxy, tel que l'acétoacétoxyéthyl (méth)acrylate et
- de 0 à 10 % en poids de motifs obtenus par polymérisation d'au moins un monomère choisi dans le groupe (II) constitué par les esters allyliques d'acides monocarboxyliques ou dicarboxyliques, tels que l'acrylate d'allyle, le méthacrylate d'allyle et le maléate ou phthalate de diallyle, les diènes conjugués tels que le butadiène et l'isoprène, les poly(méth)acrylates de polyol tels que le diméthacrylate d'éthylèneglycol ou de triéthylène glycol, le diméthacrylate de 1,3 ou 1,4 butylèneglycol, le diacrylate de 1,4 butanediol et le tétraacrylate de pentaérythritol, le triméthylolpropane triacrylate, les polyvinyl benzènes tels que le divinylbenzène ou le trivinylbenzène et les dérivés polyallyliques tels que le cyanurate de triallyle, l'isocyanurate de triallyle et le trimésate de triallyle.

Par (méth)acrylate ou (méth)acrylique, on signifie respectivement soit acrylate ou méthacrylate, soit acrylique ou méthacrylique.

Les monomères du groupe (II) agissent comme agents de réticulation dans les polymères P1 et P2.

En général, le polymère P1 à caractère mou est constitué majoritairement de motifs provenant de la polymérisation d'au moins un monomère choisi parmi l'acrylate ou méthacrylate de butyle, l'acrylate ou le méthacrylate de méthyle, l'acrylate ou le méthacrylate d'éthyle ou d'éthyl-2 hexyle, le styrène, cependant que le polymère P2 à caractère dur est généralement majoritairement constitué de motifs provenant de la polymérisation d'au moins un monomère choisi parmi le méthacrylate de méthyle, le styrène, le chlorure de vinyle, l'acide acrylique ou méthacrylique, l'acide itaconique, l'acide maléique, l'hydroxyéthyl acrylate ou méthacrylate.

Les monomères réticulants préférés sont le diacrylate de 1,4-butanediol, le diméthacrylate d'éthylèneglycol, le diméthacrylate de triéthylène glycol et le triméthylolpropane triacrylate, la teneur en monomères réticulants étant comprise entre 0 et 10 % en poids, par rapport au poids total des particules.

Le polymère P2 dur peut être greffé directement sur le polymère P1 ou par l'introduction sur ce dernier de restes de motifs monomères. Ces restes de motifs monomères sont obtenus par l'incorporation dans le polymère P1 mou, de monomères greffants choisis soit parmi les diènes conjugués, les restes de motifs monomères résultant de l'incorporation partielle en 1,2 du diène lors de la polymérisation, soit parmi les esters allyliques d'acides carboxyliques ou dicarboxyliques, α,β-insaturés, qui possèdent deux fonctions copolymérisables de réactivités différentes.

Les monomères greffants préférés selon l'invention sont le butadiène, le méthacrylate d'allyle et le diallyle maléate.

Les polymères P1 et P2 selon l'invention, peuvent être préparés par polymérisation en émulsion en au moins deux étapes, comme décrit ci-après, à partir des monomères choisis dans le groupe (I) et éventuellement le groupe (II) ci-dessus.

La sélection des monomères tant pour le polymère P1 mou que pour le polymère P2 dur, est conditionnée par les propriétés que l'on souhaite conférer aux polymères en question et, plus particulièrement, aux compositions pour le traitement du cuir selon l'invention. Dans le cas des fixatives, on peut citer comme propriétés importantes :

- la résistance au frottement qui dépend des températures de transition vitreuse des polymères P1 et P2,
- l'adhérence sur les couches inférieures qui dépend de la nature des monomères présents dans le polymère P2 et de la teneur en tensioactif de la dispersion,
- la tenue à l'eau qui dépend de l'hydrophobie des monomères, de la teneur en tensioactif de la dispersion et de la teneur en agent réticulant extérieur.

Ces dispersions aqueuses de particules multiphasiques de polymère présentent la consistance et l'aspect d'un latex. La teneur en matière sèche dans ces dispersions est généralement comprise entre 10 et 50 % en poids, de préférence entre 20 et 45 %. Ces dispersions peuvent être directement employées seules ou en mélanges avec un autre latex acrylique, polyuréthane ou polyuréthane-acrylique pour réaliser les compositions de traitement du cuir selon l'invention. L'homme du métier sait faire de telles compositions. On indique ci-après quelques exemples d'additifs pouvant être introduits seuls ou en mélanges dans les compositions selon l'invention :

- Un agent anti-mousse, à une teneur de préférence comprise entre 0,01 % et 2 % en poids par rapport au poids total de la composition, par exemple une silicone ou un dérivé de silicone.
- Un agent conservateur pour éviter le développement de micro-organismes. On utilise de préférence entre 0,01 % et 2 % en poids par rapport au poids total de la composition d'un tel agent, en général choisi parmi les dérivés de type imidazolidinyl-urée et les dérivés de type parabens, comme les alkylparahydroxybenzoates.
- Un pigment organique ou minéral, coloré, noir ou blanc, tel que le noir de carbone, ou un colorant à une teneur adaptée pour avoir le rendement de couleur souhaité.
- Un régulateur de pH tel que les amines, les hydroxydes alcalins, l'hydroxyde d'ammonium ou une combinaison de ces additifs.

Selon la teneur en monomères fonctionnels de la dispersion utilisée, on introduira ou non un agent réticulant de ces fonctions, choisi parmi les réticulants classiques utilisés dans l'application finissage du cuir. Nous pouvons citer entre autre les polyaziridines, les époxydes, les dérivés de l'hydrazide, les polyisocyanates et les polycarbodiimides. La réticulation permet de conserver un bon niveau d'adhérence sur cuir. Elle conduit aussi à une amélioration de la résistance dynamique à la pénétration d'eau, ainsi qu'à une amélioration de la tenue aux frottements en présence d'eau et de solvants organiques. La teneur en agent réticulant dans sa présentation commerciale est généralement comprise entre 0 et 20% en poids (exprimé par rapport au latex commercial) et de préférence entre 0,1 et 10 %.

La quantité de dispersions aqueuses de polymère filmogène contenue dans les compositions pour le traitement du cuir est généralement comprise entre 10 % et 80 % en poids, de préférence entre 20 % et 50 %, selon la teneur en matière active du latex. La teneur en matière active totale dans ces compositions pour traitement du cuir est typiquement comprise entre 5 et 30 % en poids, et de préférence entre 10 et 20 %.

Une dispersion aqueuse convenant pour la réalisation des compositions selon l'invention est une dispersion aqueuse ne contenant ni co-solvant, ni plastifiant, filmifiant par évaporation à une température inférieure à 60°C, la dispersion aqueuse selon l'invention étant constituée de particules de polymères hydrophobes structurés en coeur/écorce, et contenant de :

- 70 à 90 % en poids d'au moins un polymère P1 à caractère mou, ayant une Tg inférieure à 20°C formant le coeur, et de
- 10 à 30 % en poids d'au moins un polymère P2 à caractère dur, ayant une Tg supérieure à 60°C formant l'écorce.
- De préférence, le coeur a une Tg1 inférieure à 5°C et l'écorce une Tg2 supérieure à 60°C. De plus, le coeur est généralement plus hydrophobe que l'écorce.

De manière générale, les dispersions aqueuses de l'invention sont préparées par polymérisation en émulsion d'un mélange de monomères constitués :

- de 90 à 100 % en poids d'au moins un monomère choisi dans le groupe (I) et
- de 0 à 10 % en poids d'au moins un monomère choisi dans le groupe (II).

Ces dispersions aqueuses sont préparées par polymérisation en émulsion en au moins deux étapes selon les techniques de polymérisation bien connues de l'homme du métier.

La composition du mélange de monomères à polymériser à chaque étape dépend des propriétés qu'on souhaite donner aux polymères formés (Tg), et aux compositions pour traitement du cuir les contenant (adhérence, résistance à l'abrasion, tenue à l'eau).

Selon l'invention, on prépare dans une première étape le polymère P1 à caractère mou et à Tg1 inférieure à 20°C constituant le coeur des particules, ensuite on procède à la préparation du polymère P2 à Tg2 supérieure à 60°C constituant l'écorce à caractère dur.

On notera que lorsque le mélange de monomères à polymériser pour former le coeur est plus hydrophobe que celui à polymériser pour former l'écorce, il est plus facile d'obtenir des particules bien structurées.

Pour chaque étape, la réaction de polymérisation est préférentiellement conduite sous atmosphère inerte en présence d'amorceurs radicalaires. Le système d'amorçage utilisé peut être un système oxydo-réducteur, un système thermique ou peroxydique tel que l'hydroperoxyde de tertio-butyle/bisulfate de sodium ou le di-isopropyl benzène, le persulfate de sodium ou de potassium, les quantités utilisées étant comprises entre 0,2 et 1 % en poids par rapport à la masse totale des monomères, préférentiellement entre 0,25 et 0,5 % en poids.

La réaction de polymérisation en émulsion selon l'invention est menée à une température comprise entre 25 et 150°C et est fonction de la nature du système d'amorçage utilisé.

La préparation des dispersions selon l'invention est effectuée de préférence selon un procédé de type semi-continu permettant de limiter les dérives des compositions qui sont fonction des différences de réactivité des différents monomères. L'introduction des monomères soit purs, soit sous forme d'une préémulsion avec une partie de l'eau et des tensio-actifs, est ainsi généralement réalisée sur une période de temps de 3 heures 30 à 5 heures. Il est également utile, bien que non indispensable d'effectuer un ensemencement de 1 à 15 % des monomères. Les systèmes émulsifiants utilisés dans le procédé de polymérisation en émulsion sont choisis dans la gamme des émulsifiants possédant une balance hydrophile/lipophile adaptée. Les systèmes préférés sont constitués par l'association d'un tensio-actif anionique, tel que le laurylsulfate de sodium, les nonylphénols sulfates éthoxylés, en particulier à 20-25 moles d'oxyde d'éthylène, le benzène dodécylsulfonate et les alcools gras éthoxylés, en particulier à 10-40 moles d'oxyde d'éthylène et les alcools gras éthoxylés.

La préparation des compositions pour traitement du cuir selon l'invention est réalisée en ajoutant sous agitation les différents additifs désirés dans la dispersion du polymère filmogène considéré, ou l'inverse en ajoutant la dispersion du polymère filmogène dans une base aqueuse contenant ces additifs. Le pH de la composition peut être ajusté en dernière étape si nécessaire. L'application des compositions selon l'invention peut être réalisée, en utilisant des techniques connues de l'homme de l'art, par exemple, à la brosse, à la peluche ou au pistolet, etc...

Ces compositions appliquées sur un substrat sèchent à température ambiante sans intervention de co-solvant, ni de plastifiant, et donne après séchage un revêtement sans collant superficiel et ayant une bonne tenue mécanique, notamment une bonne résistance aux frottements, ainsi qu'une bonne tenue à l'eau.

Les performances des compositions pour le traitement du cuir selon l'invention sont mesurées après application au moyen de tests classiques pour l'homme du métier.

Les exemples suivants illustrent l'invention sans la limiter.

Méthodes expérimentales

L'efficacité de différents réticulants a été mise en évidence par l'étude des propriétés mécaniques des films de latex selon l'invention et de leur gonflement dans divers solvants. Ces films sont obtenus par évaporation dans un moule en TEFLON de la dispersion du polymère filmogène, en présence ou non de réticulant.

Test de traction :

Le module élastique et la contrainte au seuil ont été déterminés à partir d'expériences de traction menées, à température ambiante, avec une machine de traction Inström, modèle 5564, équipée d'un capteur de force de 10 N (précision +/- 2%). Ces expériences de traction ont été réalisées sur des éprouvettes rectangulaires de largeur 5 mm et d'épaisseur voisine de 250 $\mu$m, découpées à l'emporte pièce dans les films. Ces éprouvettes sont stockées à 23°C et 50% d'humidité relative pendant 7 jours avant les mesures. La distance initiale entre les mors qui maintiennent l'éprouvette est de typiquement 25 mm. La vitesse de traction utilisée est de 10 mm/mn.

Mesure du gonflement

Les gonflements des films ont été mesurés dans trois solvants : l'eau, l'éthanol (EtOH) et la méthyléthylcétone (MEK). Les expériences de gonflement ont été réalisées sur des éprouvettes rectangulaires d'épaisseur voisine de 500 $\mu$m, découpées à l'emporte pièce dans les films. La longueur et la largeur des éprouvettes utilisées pour les mesures de gonflement dans l'eau sont de respectivement 50 mm et 25 mm. Elles sont de seulement 25 et 10 mm pour les mesures de gonflement dans l'éthanol et la méthyléthylcétone.

Ces éprouvettes sont stockées à 23°C et 50% d'humidité relative pendant 7 jours avant les mesures. Les éprouvettes sont immergées pendant 24 heures à température ambiante dans chaque solvant puis séchées superficiellement et pesées. On exprime alors le gonflement G par le rapport suivant :

$$G = 100 * (Mg - Ms°)/Ms°$$

où Ms° est la masse sèche du film avant immersion dans le solvant et Mg la masse du film gonflé après immersion dans le solvant.

Afin d'évaluer l'apport des compositions pour le finissage du cuir selon l'invention, les caractéristiques suivantes de différents finissages ont été déterminées en utilisant les tests connus de la profession:

- adhérence du finissage sur cuir;
- résistance dynamique à la pénétration d'eau (pénétromètre Bally);
- tenue aux frottements (Veslic);

L'adhérence du finissage sur le cuir est évalué à l'aide d'un test de pelage à 90°. Une éprouvette est collée avec une colle cyanoacrylate, coté finissage, sur un support en aluminium ayant une surface de 10 x 50 mm². A l'aide d'une machine de traction (vitesse: 50 mm/min.) nous mesurons sur six éprouvettes la force à la rupture. D'après notre expérience, la qualité de l'adhésion d'un finissage sur le cuir peut être classée en quatre catégories :

- pour une force de pelage inférieure à 0,6 daN, la rupture est systématiquement adhésive donc jugée mauvaise
- pour une force comprise entre 0,6 et 0,8 daN, l'adhésion est considérée comme correcte et nous obtenons souvent ces valeurs avec les produits du marché
- lorsque la force de pelage est comprise entre 0,8 et 1 daN l'adhésion est bonne et nous observons l'arrachement de la fleur.
- pour une force supérieure à 1 daN, la rupture est cohésive et nous observons souvent une déchirure du cuir.

La résistance dynamique à la pénétration de l'eau des différents finissages est mesurée à l'aide d'un pénétromètre BALLY (norme NFG 52015). Nous déterminons la cinétique d'absorption d'eau en fonction du temps et non un nombre de cycles jusqu'à transpercement. Cette méthode est une adaptation de la norme. Pour cela, nous mesurons, après un essuyage léger, la prise de poids de 4 éprouvettes après 1, 3, 5 et 7 heures de sollicitation sur le pénétromètre BALLY.

La résistance aux frottements à sec ou en présence de solvants (eau, éthanol, acétone) est déterminée conformément à la norme NFG 52301.

Pour évaluer les performances applicatives de ces compositions, nous utilisons une peau de veau, pleine fleur semi-finie, de la société COSTIL dérayée à 1,6-1,8 mm.

Exemples

- Les abréviations suivantes sont utilisées dans les exemples :

MAM :   méthacrylate de méthyle
ABu :   acrylate de n-butyle
AM :   acide méthacrylique
AE :   acrylate d'éthyle
BDA :   diacrylate de butanediol-1,4
MDA :   maléate de diallyle

Exemple 1 : préparation d'un latex selon l'invention

On opère en deux étapes dans un réacteur de 5 litres équipé d'un agitateur, d'une prise de température et d'une double enveloppe parcourue par un fluide caloporteur pour le maintien du réacteur en température.

1ère étape : Dans ce réacteur, maintenu à température ambiante, et sous agitation, on introduit après avoir effectué un dégazage à l'azote, 1480 g d'eau déminéralisée et 5 g de phosphate disodique, puis on ajoute dans ce milieu 208 g d'une solution aqueuse de lauryl sulfate de sodium à 3,84% en poids, à titre d'agent émulsifiant, et 4,3 g de persulfate de potassium dissous dans 97,7 g d'eau.

On porte ensuite la température du contenu du réacteur à 80˚C et on ajoute alors en continu audit contenu un mélange composé de 722 g d'acrylate de n-butyle, 309,4 g de méthacrylate de méthyle et 10,9 g de diacrylate de butanediol-1,4 sur une durée de une heure. Parallèlement, on ajoute audit contenu 0,96 g de bisulfite de sodium dissous dans 34 g d'eau sur une durée de une heure. A la fin de l'addition des monomères et de la solution de bisulfite de sodium on maintient le réacteur à 80 ˚C sous agitation pendant 30 minutes.

On ajoute dans le réacteur maintenu à 80˚C un mélange constitué de 26,5 g d'acrylate de n-butyle et 5,7 g de maléate de diallyle et 4,7 g d'une solution aqueuse de bisulfite de sodium à 4,47% en poids. Ensuite, on ajoute au milieu réactionnel, en 30 minutes, un mélange de 66,05 g de méthacrylate de méthyle et de 0,28 g de persulfate de potassium dissous dans 6,37 g d'eau. On maintient la température à 80˚C pendant une heure. On obtient le coeur mou des particules de latex avec une conversion de 98,4%, déterminée par gravimétrie.

2ème étape : Au milieu réactionnel précédemment obtenu, maintenu à 80˚C, on ajoute sous agitation, 1 g de sulfoxylate formaldéhyde de sodium dans 4,2 g d'eau. On ajoute ensuite sur une période d'une heure un mélange de 198,4 g de méthacrylate de méthyle, de 27 g d'acide méthacrylique et de 75 g d'eau, d'une part, et 0,86 g d'hydroperoxyde de tertiobutyle dans 260 g d'eau, d'autre part.

Le contenu du réacteur est maintenu à 80˚C pendant 30 minutes après la fin de l'addition de méthacrylate de méthyle, de l'acide méthacrylique et de l' d'hydroperoxyde de tertiobutyle et on ajoute au contenu 0,5 g d'hydroperoxyde de tertiobutyle et 0,21 g de bisulfite de sodium dans 10 g d'eau.

Le mélange réactionnel est ensuite maintenu à 80˚C pendant une heure. Au bout de cette durée, le contenu du réacteur est refroidi à température ambiante.

On obtient avec une conversion de 98,5 % un latex du copolymère greffé, dont le diamètre des particules (moyenne en poids déterminée par diffusion de lumière) est de 84 nm et l'extrait sec de 38,4 %. L'analyse thermique différentielle du polymère obtenu montre qu'il a 2 Tg, l'une située à -10˚C, l'autre à 108˚C.

Le pH de la solution est ultérieurement ajusté entre 8 et 9 à l'aide d'une solution d'hydroxyde d'ammoniaque à 4,4 % en matière active.

Exemples 2 à 4 : préparation de latex selon l'invention

Des dispersions de particules multiphasiques de polymère ont été réalisées selon la méthode décrite dans l'exemple 1. Les quantités de monomères et autres additifs de synthèse introduits lors de la première étape sont identiques à celles de l'exemple 1. Les teneurs en monomères introduits dans la deuxième étape ont été modifiées comme indiqué dans le tableau 1 ci-après :

Tableau 1

| Exemple | Monomères introduits dans le réacteur (% en poids rapporté au poids total des monomères dans les particules) | |
|---|---|---|
| | En première étape | En deuxième étape |
| 2 | 28 MAM/ 55,9 ABu/ 0,81 BDA/ 0,43 MDA | 13,8 MAM/ 1,01 AM |
| 3 | 28 MAM/ 55,9 ABu/ 0,81 BDA/ 0,43 MDA | 14,8 MAM |
| 4 | 28 MAM/ 55,9 ABu/ 0,81 BDA/ 0,43 MDA | 13,6 MAM/ 1,19 AE |

Les teneurs en réticulant indiquées dans les exemples 5 et 6 sont exprimées en % en poids de réticulant commercial par rapport au latex sec.

Exemple 5 : Mise en évidence de la réticulation du latex de l'exemple 1 par un polyisocyanate : le Bayhydur 3100 de Bayer.

Le tableau 2 donne les résultats des mesures de gonflement (G) réalisées sur des films du latex de l'exemple 1, préparés en présence de différentes teneurs en Bayhydur 3100.

Tableau 2

| Teneur (%) en Bayhydur 3100 | EAU | EtOH | MEK |
|---|---|---|---|
| | G (%) | G (%) | G (%) |
| 0 | 27,5 | n.m* | n.m |
| 2,8 | 22 | 166 | n.m |
| 4 | 21 | 149 | n.m |
| 5,6 | 21 | 127 | 508 |
| 10 | 17,5 | 112 | 284 |
| 20 | 10,5 | 80 | 178 |
| *n.m : non mesurable, soit le latex se disperse complètement dans le solvant ou le film est trop fragile et se désagrège lorsqu'on le sort du solvant. | | | |

Ces mesures indiquent une nette diminution du gonflement des films de latex dans l'eau, l'éthanol et la MEK en présence du Bayhydur 3100.

Le tableau 3 donne les résultats des mesures de propriétés mécaniques réalisées sur des films du latex de l'exemple 1, préparés en présence des différentes teneurs en Bayhydur 3100.

Tableau 3

| Teneur (%) en Bayhydur 3100 | E (MPa) | $\sigma$ y (MPa) | $\sigma$ rup (MPa) |
|---|---|---|---|
| 0 | 128 | 3,87 | 5,3 |
| 5.6 | 135 | 4,9 | 7,5 |
| 10 | 150 | 4,8 | 7,6 |
| 20 | 190 | 5,1 | 9 |

L'augmentation de la teneur en Bayhydur 3100 induit un renforcement important des propriétés mécaniques des films, caractéristique de leur réticulation, avec en particulier une augmentation de leur module élastique, de leur contrainte au seuil de déformation et de leur contrainte à la rupture.
Ces résultats de gonflement et de propriétés mécaniques démontrent ainsi clairement l'efficacité du Bayhydur 3100 pour réticuler le latex de l'exemple 1, renforcer les propriétés mécaniques des films et diminuer leur sensibilité aux solvants.

Exemple 6 : Mise en évidence de la réticulation du latex de l'exemple 1 par une polyaziridine : le CX100 de Zéneca.

Le tableau 4 donne les résultats des mesures de gonflement (G) réalisées sur des films du latex de l'exemple 1, préparés en présence de différentes teneurs en CX100.

Tableau 4

| Teneur (%) en CX100 | EAU | EtOH | MEK |
|---|---|---|---|
| | G (%) | G (%) | G (%) |
| 0 | 27,5 | n.m* | n.m |
| 0,5 | 9 | 99 | 227 |
| 0,8 | 6 | 71 | 332 |
| *n.m : non mesurable, le latex se disperse complètement dans le solvant | | | |

Ces mesures de gonflement indiquent une nette diminution du gonflement des films de latex dans l'eau, l'éthanol et la MEK en présence d'une teneur très faible en CX100.

Le tableau 5 donne les résultats des mesures de propriétés mécaniques réalisées sur des films du latex de l'exemple 1, préparés en présence de 0,8% de CX100.

Tableau 5

| Teneur (%) en CX 100 | E (MPa) | σ y (MPa) | σ rup (MPa) |
|---|---|---|---|
| 0 | 128 | 3,87 | 5,3 |
| 0,8 | 113 | 4,4 | 7,4 |

L'ajout d'une très faible teneur en CX100 induit une augmentation significative de la contrainte au seuil de déformation et de la contrainte à la rupture des films qui sont caractéristiques de leur réticulation.

Ces résultats de gonflement et de propriétés mécaniques démontrent aussi clairement l'efficacité du CX100, à très faible teneur, pour réticuler le latex de l'exemple 1, renforcer les propriétés mécaniques des films et diminuer leur sensibilité aux solvants.

Exemples 7 et 8 : Evaluation des compositions selon l'invention dans l'application Fixative.

Pour faire cette évaluation, nous avons appliqué deux couches.
Une couche de fond, de composition :

- eau          50 parties
- latex : mélange de deux émulsions acryliques REPOLEM 3911 - 3110 (50/50) de la société Elf Atochem          30 parties
- pigment noir (Noir Lepton de Bayer)          20 parties

Cette formulation de couche de fond présente un extrait sec de 15 %. Elle est appliquée à l'aide d'un pistolet pneumatique en une couche croisée. La quantité déposée est comprise entre 100 et 120 g/m$^2$. La couche de fond est séchée à 70° C pendant 20 minutes puis satinée pendant 15 secondes à 70° C sous une charge de l'ordre de 1 tonne/m$^2$. Une fixative, appliquée de la même manière, de composition :

- eau          50 parties
- latex (selon les exemples 1 à 4)          30 parties
- pigment noir          20 parties

Comme précédemment, la teneur en matière sèche de la fixative est de 15%. Contrairement au mode d'utilisation normal d'une fixative qui est généralement transparente, nous avons introduit lors de nos essais un pigment pour permettre une meilleure évaluation de la tenue aux frottements à sec ou en présence de solvants (eau, acétone, éthanol) du finissage. Cette dernière couche est séchée à 70° C pendant 20 minutes puis satinée à 70° C pendant 15 secondes sous une charge de 1 tonne/m$^2$. La quantité de fixative déposée est comprise entre 60 et 80 g/m$^2$. La fixative s'applique sans difficulté sur la couche de fond. Son étalement est bon. Les différents finissages ne présentent pas de tack et la main du cuir est bonne. Le toucher obtenu avec les différents finissages revendiqués est très différent de celui obtenu avec une fixative polyuréthanne, acrylique ou à base de nitrocellulose.

Dans le but de bien mettre en évidence l'intérêt des compositions pour traitement du cuir préparées selon l'invention, nous avons utilisé comme fixatives témoins, une émulsion polyuréthane de Bayer (Bayderm 85 UD) et une émulsion acrylique de Röhm & Haas (HYDROLACQ AQS). L'émulsion Bayderm 85UD a été en outre évaluée après réticulation par le Bayderm Fix UCL de Bayer.

Exemple 7 : Influence de la teneur en fonctions acides en écorce:

|  | Synthèse 3 | Synthèse 2 | Synthèse 1 | Bayderm 85 UD | Hydrholac AQS |
|---|---|---|---|---|---|
| Teneur en acide | 0 % | 1,01 % | 2 % | - | - |
| Bally :            1 h | 7,2 +/- 0,5 | 10,5 +/- 2,5 | 20,2 +/- 2,4 | 60,7 +/- 2,5 | 10,9 |
|                       3 h | 13,5 +/- 1,5 | 22,7 +/- 5,9 | 44,7 +/- 3,6 | 117 +/- 2,6 | 18,2 |
|                       5 h | 15,7 +/- 2,1 | 36,4 +/- 9,5 | 65,4 +/- 5,3 | - | 22,3 |
|                       7 h | 17,7 +/- 2,3 | 44,2 +/- 10,5 | 80,4 +/- 6,8 | - | 27,8 |
| Tenue aux frottements Sec (150 cycles) | 5 | 5 | 5 | 5 | 5 |
| Eau (150 cycles) | 5 | 3 | 2 | 2 | 1 |
| Ethanol (10 cycles) | 1 | 1 | 1 | 1 | 1 |
| Acétone (10 cycles) | 1 | 1 | 1 | 1 | 1 |
| Adhésion (daN) | 1,3 | 2,4 | 3 | 3,2 | 0,9 |

L'introduction de fonctions acides en écorce induit une amélioration de l'adhésion du finissage. Nous observons en effet une augmentation de la force de pelage avec la concentration en monomères acides, bien qu'une force de pelage supérieure à 1 daN conduise souvent à une rupture cohésive du cuir.

Par rapport à une finition polyuréthane non réticulée (Bayderm 85 UD), les finitions revendiquées par la demanderesse conduisent à une meilleure tenue au Bally quel que soit le taux de fonctions acides, ainsi qu'à une tenue aux frottements supérieure ou égale.

Par rapport à une finition acrylique du commerce (Hydrholac AQS), la présence de fonctions acides induit une augmentation de la reprise en eau au test Bally. Par contre, les autres propriétés de cette finition concurrente sont inférieures à celles obtenues avec les finitions revendiquées par la demanderesse.

Exemple 8 : Influence de la réticulation des monomères fonctionnels de l'écorce.

Pour compenser la sensibilité à l'eau, il est possible d'utiliser un réticulant externe qui réagit sur les fonctions acides. Ainsi en ajustant le taux de réticulant, nous pouvons conserver une bonne adhésion sur le cuir, réduire la sensibilité à l'eau et peut être améliorer la résistance aux solvants. Il est bien connu de l'homme de l'art (R. G. COOGAN, Progress in organic coatings, 32, p. 51-63 (1997) « Post-crosslinking of water-borne urethanes ») que des composés multifonctionnels tels que les polyaziridines comme le CX 100 de la société ZENECA Resins, les polycarbodiimides comme l'UCARLINK XL 29 SE de la société Union Carbide ou le Bayderm FIX UCL de la société Bayer , les polyépoxy ou les polyisocyanates en dispersion aqueuse comme le Bayhydur 3100 de la société Bayer (G. OERTEL « polyurethane Handbook » Hanser Publishers 1994) permettent la post-réticulation de latex comportant des fonctions acides. Nous avons donc évalué l'apport d'une post-réticulation avec un polyisocyanate en dispersion aqueuse (Bayhydur 3100) sur les compositions revendiquées par la demanderesse. La teneur en Bayhydur 3100 indiquée dans le tableau suivant est exprimée en % en poids de réticulant commercial par rapport au latex sec.

Le latex polyuréthane témoin a également été réticulé au moyen d'un polycarbodiimide, le Bayderm FIX UCL de la société Bayer. Dans ce cas, la proportion de réticulant ajouté est exprimée sous forme d'un pourcentage pondéral du réticulant dans sa présentation commerciale par rapport au latex lui aussi dans sa présentation commerciale.

| Polymère | Synthèse 1 | | Bayderm 85 UD | | |
|---|---|---|---|---|---|
| Réticulant | - | + 5,6 % Bayhydur 3100 | - | + Fix UCL 1 % | + Fix UCL 5 % |
| Teneur en acide | 2 % | - | - | | |
| Bally :  1 h (%) | 20,2 +/- 2,4 | 5,9 +/- 0,6 | 60,7 +/- 2,5 | 10,7 +/- 2,6 | 11 +/- 1,2 |
| 3 h (%) | 44,7 +/- 3,6 | 7,8 +/- 0,7 | 117 7 +/- 2,6 | 20,5 +/- 5,6 | 17,6 +/- 1,2 |
| 5 h (%) | 65,4 +/- 5,3 | 9,5 +/- 0,5 | - | 28,8 +/- 9,9 | 21,7 +/- 1,4 |
| 7 h (%) | 80,4 +/- 6,8 | 10,9 +/- 1,0 | - | 34,8 +/- 13,8 | 22,4 +/- 2,1 |
| Tenue aux frottements Sec (150 cycles) | 5 | 5 | 5 | 5 | 5 |
| Eau (150 cycles) | 2 | ¾ | 2 | 2 | 2 |
| Ethanol (10 cycles) | 1 | 1 | 1 | 1 | 1 |
| Acétone (10 cycles) | 1 | ½ | 1 | 1 | 1 |
| Adhésion (daN) | 3 | 4,2 | 3,2 | 2,2 | 2 |

L'introduction d'un polyisocyanate comme agent de post-réticulation dans les compositions revendiquées induit non seulement une forte diminution de la reprise en eau lors du test Bally mais apporte aussi une amélioration de la tenue aux frottements en présence d'eau et d'acétone ainsi qu'une augmentation de l'adhésion de la finition.

La post-réticulation de la finition polyuréthane conduit aussi à une diminution de la reprise en eau lors du test Bally. Toutefois, toutes les propriétés de la finition réticulée selon l'invention sont supérieures à celles obtenues après réticulation de la finition polyuréthane.

De plus, la composition pour finissage du cuir, préparée selon l'invention avec le latex de l'exemple 1 et le Bayhydur 3100 à un extrait sec de 15 % en poids, a une très bonne stabilité en pot. Celle-ci s'est avérée supérieure à 3 semaines à température ambiante.

**Revendications**

1.  - Composition aqueuse pour le traitement du cuir comprenant :

(a) une dispersion aqueuse de particules multiphasiques de polymère dans laquelle les particules de polymère comprennent au moins deux phases distinctes :

- une première phase interne formée par un polymère P1 à caractère mou ayant une température de transition vitreuse (Tg1) inférieure à 20˚C ; et
- une deuxième phase externe formée par un polymère P2 à caractère dur ayant une température de transition vitreuse (Tg2) supérieure à 60˚C, et pouvant contenir des monomères fonctionnels réactifs ; le polymère P2 dur étant greffé sur le polymère P1 mou directement ou par l'introduction sur ce dernier de restes de motifs monomères ;

le polymère P1 ayant une hydrophobie supérieure à celle du polymère P2 ;
(b) éventuellement au moins un agent réticulant réagissant sur les monomères fonctionnels de la phase externe, la quantité d'agent réticulant (b) étant comprise entre 0 et 20% en poids par rapport au poids de la dispersion (a) ;
(c) éventuellement au moins un autre latex acrylique, polyuréthane ou polyuréthane acrylique ;
(d) éventuellement au moins un additif ;

la teneur en matière active totale de ladite composition étant comprise entre 5 et 30% en poids.

**2.** - Composition selon la revendication 1, **caractérisée par le fait que** le polymère P1 a une Tg1 inférieure à 5˚C, et le polymère P2, une Tg2 supérieure à 60˚C.

**3.** - Composition selon l'une des revendications 1 et 2, **caractérisée par le fait que** le polymère P1 représente 70 à 90% en poids des particules et le polymère P2 représente 10 à 30% en poids des particules.

**4.** - Composition selon l'une des revendications 1 à 3, **caractérisée par le fait que** le polymère P1 et P2 contiennent :

- de 90 à 100% en poids de motifs obtenus par polymérisation d'au moins un monomère choisi dans le groupe (I) constitué par les alkyl($C_1$-$C_{16}$) esters de l'acide (méth)acrylique tels que le (méth)acrylate de méthyle, le (méth)acrylate d'éthyle et le (méth)acrylate de butyle, les hydroxy-alkyl esters de l'acide (méth)acrylique, les esters vinyliques des acides carboxyliques linéaires ou ramifiés tels que l'acétate de vinyle et le stéarate de vinyle, le styrène, les alkylstyrènes, tels que le méthylstyrène, les haloalkylstyrènes tels que le chlorométhylstyrène, le (méth)acrylamide, l'acrylonitrile, le chlorure de vinyle, les acides (méth)acryliques et leurs dérivés, tels que les anhydrides, les monomères comportant des fonctions acides ou basiques, tels que l'acide itaconique, l'acide fumarique, l'acide crotonique, l'acide maléique, les monomères (méth)acryliques ou vinyliques silanés, tels que le méthacryloxypropyl triéthoxy ou triisopropoxysilane, les monomères contenant des groupes acétoacétoxy, tels que le (méth)acrylate d'acétoacétoxyéthyle, et
- de 0 à 10% en poids de motifs obtenus par polymérisation d'au moins un monomère choisi dans le groupe (II) constitué par les esters allyliques d'acides monocarboxyliques ou dicarboxyliques, tels que l'acrylate d'allyle, le méthacrylate d'allyle et le maléate ou phtalate de diallyle, les diènes conjugués, tels que le butadiène et l'isoprène, les poly(méth)acrylates de polyols, tels que le diméthacrylate d'éthylèneglycol ou de triéthylène glycol, le diméthacrylate de 1,3- ou 1,4-butylèneglycol, le diacrylate de 1,4-butanediol et le tétraacrylate de pentaérythritol, le triméthylolpropane triacrylate, les polyvinyl benzènes, tels que le divinylbenzène ou le trivinylbenzène et les dérivés polyallyliques, tels que le cyanurate de triallyle, l'isocyanurate de triallyle et le trimésate de triallyle.

**5.** - Composition selon la revendication 4, **caractérisée par le fait que** :

- pour le polymère P1, les monomères sont choisis parmi l'acrylate ou le méthacrylate de butyle, l'acrylate ou le méthacrylate de méthyle, l'acrylate ou le méthacrylate d'éthyle ou d'éthyl-2-hexyle, le styrène ; et
- pour le polymère P2, les monomères sont choisis parmi le méthacrylate de méthyle, le styrène, le chlorure de vinyle, l'acide acrylique ou méthacrylique, l'acide itaconique, l'acide maléique, l'acrylate ou le méthacrylate d'hydroxyéthyle.

**6.** - Composition selon l'une des revendications 1 à 5, **caractérisée par le fait que** le polymère P2 contient au moins 50% en poids de monomères hydrophobes.

**7.** - Composition selon l'une des revendications 1 à 6, **caractérisée par le fait que** les restes des motifs monomères permettant le greffage du polymère P2 sur le polymère P1 sont choisis parmi les diènes conjugués et les esters allyliques d'acides carboxyliques ou dicarboxyliques insaturés.

**8.** - Composition selon l'une des revendications 1 à 7, **caractérisée par le fait que** les monomères fonctionnels, pouvant entrer dans la composition du polymère P2 à raison de jusqu'à 19% en poids, sont choisis parmi les monomères acides, hydroxylés ou époxydés.

**9.** - Composition selon l'une des revendications 1 à 7, **caractérisée par le fait que** la teneur en matière sèche de la dispersion (a) est comprise entre 10 et 50% en poids, de préférence entre 20 et 45% en poids.

**10.** - Composition selon l'une des revendications 1 à 9, **caractérisée par le fait que** la quantité de la dispersion (a) dans la composition est comprise entre 10% et 80% en poids, de préférence entre 10 et 20% en poids.

**11.** - Composition selon l'une des revendications 1 à 10, **caractérisée par le fait que** la dispersion (a) est une dispersion qui ne contient ni co-solvant, ni plastifiant, et qui filmifie par évaporation à une température inférieure à 60˚C.

**12.** - Composition selon l'une des revendications 1 à 11, **caractérisée par le fait que** le ou les agents réticulants (b) sont choisis dans le groupe contenant les époxydes, les dérivés de l'hydrazide, les polyisocyanates et les polycarbodiimides, étant introduits de préférence à raison de 0,1 à 10% en poids du poids total de la dispersion (a).

**13.** - Composition selon l'une des revendications 1 à 12, **caractérisée par le fait que** les monomères fonctionnels présents dans la phase externe P2 sont choisis parmi l'acide acrylique ou l'acide méthacrylique et l'agent réticulant (c) est un polyisocyanate.

**14.** - Composition selon l'une des revendications 1 à 13, **caractérisée par le fait que** sa teneur en matière active totale est comprise entre 10 et 20% en poids.

**15.** - Utilisation de la composition telle que définie à l'une des revendications 1 à 14 pour le traitement du cuir, en particulier comme composition pour le finissage et, plus particulièrement comme fixative.

**16.** - Procédé de préparation de la composition telle que définie à l'une des revendications 1 à 14, **caractérisé par le fait que** l'on ajoute sous agitation les additifs désirés dans la dispersion de polymère filmogène ou on ajoute la dispersion de polymère filmogène dans une base aqueuse contenant ces additifs.

**17.** - Procédé de traitement du cuir, **caractérisé par le fait que** l'on applique sur le cuir, notamment à la brosse, à la peluche ou au pistolet, une composition telle que définie à l'une des revendications 1 à 14, et qu'on laisse sécher à la température ambiante.

**18.** - Cuir traité par une composition telle que définie à l'une des revendications 1 à 14.


**Claims**

**1.** Aqueous composition for the treatment of leather, comprising:

(a) an aqueous dispersion of multiphase polymer particles in which the polymer particles comprise at least two distinct phases:

- a first internal phase formed by a polymer P1 with a soft nature having a glass transition temperature (Tg1) of less than 20°C; and
- a second external phase formed by a polymer P2 with a hard nature having a glass transition temperature (Tg2) of greater than 60°C and being able to comprise reactive functional monomers; the hard polymer P2 being grafted to the soft polymer P1 directly or by the introduction onto the latter of residues from monomer units;

the polymer P1 having a greater hydrophobicity than that of the polymer P2;
(b) optionally at least one crosslinking agent which reacts with the functional monomers of the external phase, the amount of crosslinking agent (b) being between 0 and 20% by weight with respect to the weight of the dispersion (a);
(c) optionally at least one other acrylic, polyurethane or polyurethane-acrylic latex;
(d) optionally at least one additive;

the total content of active material in said composition being between 5 and 30% by weight.

**2.** Composition according to Claim 1, **characterized in that** the polymer P1 has a Tg1 of less than 5°C and the polymer P2 a Tg2 of greater than 60°C.

**3.** Composition according to either of Claims 1 and 2, **characterized in that** the polymer P1 represents 70 to 90% by weight of the particles and the polymer P2 represents 10 to 30% by weight of the particles.

**4.** Composition according to one of Claims 1 to 3, **characterized in that** the polymers P1 and P2 comprise:

- from 90 to 100% by weight of units obtained by polymerization of at least one monomer chosen from the group (I) consisting of $(C_1-C_{16})$alkyl esters of (meth)acrylic acid, such as methyl (meth)acrylate, ethyl (meth)acrylate and butyl (meth)acrylate, hydroxyalkyl esters of (meth)acrylic acid, vinyl esters of linear or branched carboxylic acids, such as vinyl acetate and vinyl stearate, styrene, alkylstyrenes, such as methylstyrene, haloalkylstyrenes, such as chloromethylstyrene, (meth)acrylamide, acrylonitrile, vinyl chloride, (meth)acrylic acids and their derivatives, such as anhydrides, monomers comprising acidic or basic functional groups, such as itaconic acid, fumaric acid, crotonic acid or maleic acid, silanated (meth)acrylic or vinyl monomers, such as methacryloyloxypropyltriethoxy- or methacryloyloxypropyltriisopropoxysilane, and monomers comprising acetoacetoxy groups, such as acetoacetoxyethyl (meth)acrylate, and
- from 0 to 10% by weight of units obtained by polymerization of at least one monomer chosen from the group (II) consisting of allyl esters of monocarboxylic or dicarboxylic acids, such as allyl acrylate, allyl methacrylate and diallyl maleate or phthalate, conjugated dienes, such as butadiene and isoprene, polyol poly(meth)acrylates, such as ethylene glycol or triethylene glycol dimethacrylate, 1,3- or 1,4-butylene glycol dimethacrylate, 1,4-butanediol diacrylate and pentaerythritol tetraacrylate, or trimethylolpropane triacrylate, polyvinylbenzenes, such as divinylbenzene or trivinylbenzene, and polyallyl derivatives, such as triallyl cyanurate, triallyl isocyanurate and triallyl trimesate.

5. Composition according to Claim 4, **characterized in that**:

   - for the polymer P1, the monomers are chosen from butyl acrylate or methacrylate, methyl acrylate or methacrylate, ethyl acrylate or methacrylate, 2-ethylhexyl acrylate or methacrylate, or styrene; and
   - for the polymer P2, the monomers are chosen from methyl methacrylate, styrene, vinyl chloride, acrylic or methacrylic acid, itaconic acid, maleic acid, or hydroxyethyl acrylate or methacrylate.

6. Composition according to one of Claims 1 to 5, **characterized in that** the polymer P2 comprises at least 50% by weight of hydrophobic monomers.

7. Composition according to one of Claims 1 to 6, **characterized in that** the residues from the monomer units which make possible the grafting of the polymer P2 to the polymer P1 are chosen from conjugated dienes and allyl esters of unsaturated carboxylic or dicarboxylic acids.

8. Composition according to one of Claims 1 to 7, **characterized in that** the functional monomers which can participate in the composition of the polymer P2 in a proportion of up to 19% by weight are chosen from acidic, hydroxylated or epoxidized monomers.

9. Composition according to one of Claims 1 to 7, **characterized in that** the content of dry matter of the dispersion (a) is between 10 and 50% by weight, preferably between 20 and 45% by weight.

10. Composition according to one of Claims 1 to 9, **characterized in that** the amount of the dispersion (a) in the composition is between 10% and 80% by weight, preferably between 10 and 20% by weight.

11. Composition according to one of Claims 1 to 10, **characterized in that** the dispersion (a) is a dispersion which comprises neither cosolvent nor plasticizer and which forms a film by evaporation at a temperature of less than 60°C.

12. Composition according to one of Claims 1 to 11, **characterized in that** the crosslinking agent or agents (b) are chosen from the group consisting of epoxides, hydrazide derivatives, polyisocyanates and polycarbodiimides, preferably being introduced in a proportion of 0.1 to 10% by weight of the total weight of the dispersion (a).

13. Composition according to one of Claims 1 to 12, **characterized in that** the functional monomers present in the external phase P2 are chosen from acrylic acid or methacrylic acid and the crosslinking agent (c) is a polyisocyanate.

14. Composition according to one of Claims 1 to 13, **characterized in that** its total content of active material is between 10 and 20% by weight.

15. Use of the composition as defined in one of Claims 1 to 14 in the treatment of leather, in particular as composition for finishing and more particularly as binder.

16. Process for the preparation of the composition as defined in one of Claims 1 to 14, **characterized in that** the desired additives are added, with stirring, to the dispersion of film-forming polymer or the dispersion of film-forming polymer is added to an aqueous base comprising these additives.

17. Process for the treatment of leather, **characterized in that** the composition as defined in one of Claims 1 to 14 is applied to the leather, in particular with a brush, with a plush applicator or with a spray gun, and **in that** drying is allowed to take place at ambient temperature.

**18.** Leather treated with the composition as defined in one of Claims 1 to 14.

**Patentansprüche**

**1.** Wässrige Zusammensetzung zur Behandlung von Leder, umfassend:

(a) eine wässrige Dispersion von mehrphasischen Polymerpartikeln, wobei die Polymerpartikel mindestens zwei getrennte Phasen umfassen:

- eine erste interne Phase, die aus einem Polymer P1 mit weichem Charakter und einer Glasübergangstemperatur (Tg1) unter 20˚C gebildet wird, und
- eine zweite, externe Phase, die aus einem Polymer P2 mit hartem Charakter und einer Glasübergangstemperatur (Tg2) über 60˚C gebildet wird und reaktive funktionelle Monomere enthalten kann, wobei das Polymer P2 auf das Polymer P1 direkt oder durch Einbringen von Resten von Monomereinheiten in Letzteres gepfropft wird;

wobei das Polymer P1 einer höhere Hydrophobie als das Polymer P2 hat;
(b) gegebenenfalls mindestens ein Vernetzungsmittel, das mit den funktionellen Monomeren der externen Phase reagiert, wobei die Menge an Vernetzungsmittel (b) zwischen 0 und 20 Gew.-%, bezogen auf das Gewicht der Dispersion (a), beträgt;
(c) gegebenenfalls mindestens einen weiteren Acryl-, Polyurethan- oder Polyurethan-Acryl-Latex;
(d) gegebenenfalls mindestens einen Zusatzstoff;

wobei der Gesamtwirkstoffgehalt der Zusammensetzung zwischen 5 und 30 Gew.-% beträgt.

**2.** Zusammensetzung nach Anspruch 1, **dadurch gekennzeichnet, dass** das Polymer P1 eine Tg1 unter 5˚C und das Polymer P2 eine Tg2 über 60˚C hat.

**3.** Zusammensetzung nach einem der Ansprüche 1 und 2, **dadurch gekennzeichnet, dass** das Polymer P1 70 bis 90 Gew.-% der Partikel ausmacht und das Polymer P2 10 bis 30 Gew.-% der Partikel ausmacht.

**4.** Zusammensetzung nach einem der Ansprüche 1 bis 3, **dadurch gekennzeichnet, dass** das Polymer P1 und P2 Folgendes enthalten:

- 90 bis 100 Gew.-% Einheiten, die durch Polymerisation von mindestens einem Monomer erhalten werden, das aus der Gruppe (I) ausgewählt ist, die aus ($C_1$-$C_{16}$)-Alkylestern von (Meth)acrylsäure, wie Methyl-(meth)acrylat, Ethyl(meth)acrylat und Butyl(meth)acrylat, Hydroxyalkylestern von (Meth)Acrylsäure, Vinylestern gerader oder verzweigter Carbonsäuren, wie Vinylacetat und Vinylstearat, Styrol, Alkylstyrolen, wie Methylstyrol, Halogenalkylstyrolen, wie Chlormethylstyrol, (Meth)acrylamid, Acrylnitril, Vinylchlorid, (Meth)Acrylsäuren und ihren Derivaten, wie Anhydriden, Monomeren, die saure oder basische Funktionen enthalten, wie Itaconsäure, Fumarsäure, Crotonsäure, Maleinsäure, silanierten (Meth)Acryl- oder Vinylmonomeren, wie Methacryloxypropyltriethoxy- oder -triisopropoxysilan, Monomeren, die Acetoacetoxygruppen enthalten, wie Acetoacetoxyethyl(meth)acrylat, besteht, und
- 0 bis 10 Gew.-% Einheiten, die durch Polymerisation von mindestens einem Monomer erhalten werden, das aus der Gruppe (II) ausgewählt ist, die aus Allylestern von Monocarbon- oder Dicarbonsäuren, wie Allylacrylat, Allylmethacrylat und Diallylmaleat oder -phthalat, konjugierten Dienen, wie Butadien und Isopren, Polyolpoly(meth)acrylaten, wie Ethylenglykol- oder Triethylenglykoldimethacrylat, 1,3- oder 1,4-Butylenglykoldimethacrylat, 1,4-Butandioldiacrylat und Pentaerythrittetraacrylat, Trimethylolpropantriacrylat, Polyvinylbenzolen, wie Divinylbenzol oder Trivinylbenzol, und Polyallylderivaten, wie Triallylcyanurat, Triallylisocyanurat und Triallyltrimesat, besteht.

**5.** Zusammensetzung nach Anspruch 4, **dadurch gekennzeichnet, dass**:

- für das Polymer P1 die Monomere aus Butylacrylat oder -methacrylat, Methylacrylat oder -methacrylat, Ethyl- oder 2-Ethylhexylacrylat oder -methacrylat, Styrol ausgewählt sind; und
- für das Polymer P2 die Monomere aus Methylmethacrylat, Styrol, Vinylchlorid, Acryl- oder Methacrylsäure, Itaconsäure, Maleinsäure, Hydroxyethylacrylat oder -methacrylat ausgewählt sind.

**6.** Zusammensetzung nach einem der Ansprüche 1 bis 5, **dadurch gekennzeichnet, dass** das Polymer P2 mindestens 50 Gew.-% hydrophobe Monomere enthält.

**7.** Zusammensetzung nach einem der Ansprüche 1 bis 6, **dadurch gekennzeichnet, dass** die Reste von Monomereinheiten, welche die Pfropfung des Polymers P2 auf das Polymer P1 gestatten, aus konjugierten Dienen und Allylestern von ungesättigten Carbon- oder Dicarbonsäuren ausgewählt sind.

**8.** Zusammensetzung nach einem der Ansprüche 1 bis 7, **dadurch gekennzeichnet, dass** die funktionellen Monomere, die in die Zusammensetzung des Polymers P2 bis zu 19 Gew.-% eingebracht werden können, aus sauren, hydroxylierten oder epoxidierten Monomeren ausgewählt sind.

**9.** Zusammensetzung nach einem der Ansprüche 1 bis 7, **dadurch gekennzeichnet, dass** der Gehalt der Dispersion (a) an Trockensubstanz zwischen 10 und 50 Gew.-%, vorzugsweise zwischen 20 und 45 Gew.-%, beträgt.

**10.** Zusammensetzung nach einem der Ansprüche 1 bis 9, **dadurch gekennzeichnet, dass** die Menge der Dispersion (a) in der Zusammensetzung zwischen 10 und 80 Gew.-%, vorzugsweise zwischen 10 und 20 Gew.-%, beträgt.

**11.** Zusammensetzung nach einem der Ansprüche 1 bis 10, **dadurch gekennzeichnet, dass** die Dispersion (a) eine Dispersion ist, die weder Co-Lösungsmittel, noch Weichmacher enthält und durch Verdampfen bei einer Temperatur unter 60˚C einen Film bildet.

**12.** Zusammensetzung nach einem der Ansprüche 1 bis 11, **dadurch gekennzeichnet, dass** das oder die Vernetzungsmittel (b) aus der Gruppe ausgewählt ist/sind, die Epoxide, Hydrazidderivate, Polyisocyanate und Polycarbodiimide enthält, die vorzugsweise zu 0,1 bis 10 Gew.-%, bezogen auf das Gesamtgewicht der Dispersion (a), eingebracht werden.

**13.** Zusammensetzung nach einem der Ansprüche 1 bis 12, **dadurch gekennzeichnet, dass** die in der externen Phase P2 vorliegenden Monomere aus Acrylsäure oder Methacrylsäure ausgewählt sind und das Vernetzungsmittel (c) ein Polyisocyanat ist.

**14.** Zusammensetzung nach einem der Ansprüche 1 bis 13, **dadurch gekennzeichnet, dass** ihr Gesamtwirkstoffgehalt zwischen 10 und 20 Gew.-% beträgt.

**15.** Verwendung einer Zusammensetzung nach einem der Ansprüche 1 bis 14 zur Behandlung von Leder, insbesondere als Zusammensetzung zur Endbearbeitung, genauer gesagt als Fixierungsmittel.

**16.** Verfahren zur Herstellung der Zusammensetzung nach einem der Ansprüche 1 bis 14, **dadurch gekennzeichnet, dass** unter Rühren die gewünschten Zusatzstoffe in die filmbildende Polymerdispersion gegeben werden oder die filmbildende Polymerdispersion in eine Zusatzstoffe enthaltende wässrige Basis gegeben wird.

**17.** Verfahren zur Behandlung von Leder, **dadurch gekennzeichnet, dass** auf das Leder, insbesondere mittels Bürste, Bausch oder Sprühpistole, eine Zusammensetzung nach einem der Ansprüche 1 bis 14 aufgebracht wird, die man bei Umgebungstemperatur trocknen lässt.

**18.** Leder, das mit einer Zusammensetzung nach einem der Ansprüche 1 bis 14 behandelt ist.